# EUROPEAN PATENT APPLICATION

(11) **EP 4 600 034 A1**
(43) Date of publication of application: **13.08.2025**
(21) Application number: 23879976.1
(22) Date of filing: 09.08.2023
(51) Int. Cl.: B32B 7/035, B32B 27/32, B32B 27/08, B32B 38/00, B32B 3/28, B32B 7/12, B65D 81/34

(54) **RETORT STERILIZATION FILM LAMINATE AND PACKAGING MATERIAL COMPRISING SAME**

(30) Priority: 18.10.2022 KR 20220134182
(71) Applicant: CJ CheilJedang Corporation, Seoul 04560 (KR)
(72) Inventor: SONG, Hui Jae, Seoul 04560 (KR); HONG, Seokjun, Seoul 04560 (KR); CHO, Kyungsik, Seoul 04560 (KR)
(74) Representative: Meissner Bolte Partnerschaft mbB
(86) International application number: PCT/KR2023/011751
(87) International publication number: WO 2024/085393

(57) **Abstract**

A retort sterilization film laminate according to an embodiment of the present invention includes a first OPP film formed of oriented polypropylene (OPP), a first CPP film formed of cast polypropylene (CPP) and laminated on one surface of the first OPP film, a second OPP film formed of oriented polypropylene and laminated on one surface of the first CPP film, and a second CPP film formed of cast polypropylene and laminated on one surface of the second OPP film.

## Description

### [Technical Field]

The present invention relates to a retort sterilization film laminate and a packaging material including the same, and more specifically, to a retort sterilization film laminate capable of maintaining interlayer adhesive strength even after retort sterilization, and a packaging material including the same.

### [Background Art]

As is known, a retort pouch packaging material is composed of a layer structure of a laminated film made of single-material PP (polypropylene) material, instead of a layer structure of a laminated film made of existing heterogeneous materials (e.g., PET, Al, Ny, PP, etc.).

The laminated film made of single-material PP has limitations in distributing heavy-weight products due to the hard and brittle nature of the PP material. In addition, since the single-material PP, which is nonpolar is laminated, the laminated film made of single-material PP causes a problem of reduced interlayer adhesive strength after retort sterilization. The decrease in interlayer adhesive strength reduces peel strength and impact strength of the laminated film.

### [Disclosure]

### [Technical Problem]

An object of the present invention is to provide a retort sterilization film laminate having enhanced interlayer adhesive strength. Another object of the present invention is to provide a retort sterilization film laminate that prevents breakage during distribution. Still another object of the present invention is to provide a packaging material including the retort sterilization film laminate.

### [Technical Solution]

A retort sterilization film laminate according to an embodiment of the present invention includes a first OPP film formed of oriented polypropylene (OPP), a first CPP film formed of cast polypropylene (CPP) and laminated on one surface of the first OPP film, a second OPP film formed of oriented polypropylene and laminated on one surface of the first CPP film, and a second CPP film formed of cast polypropylene and laminated on one surface of the second OPP film.

At least one of the first OPP film and the second OPP film may be formed as a barrier OPP film for blocking oxygen or moisture.

The barrier OPP film may be formed as a transparent film deposited with AlOx.

The barrier OPP film may be formed as a transparent film deposited with a SiOx type inorganic material.

The first CPP film may have surface irregularities by being corona-treated on both surfaces.

The first CPP film and the second CPP film may have a thickness ratio of 1:1 to 1:2.5.

The first CPP film and the second CPP film may include a rubber component.

A dry lamination layer may be provided between the respective films of the first OPP film, the first CPP film, the second OPP film, and the second CPP film.

A packaging material according to an embodiment of the present invention includes the retort sterilization film laminate, a first film laminate forming one side in a thickness direction of the packaging material, a second film laminate forming the other side in the thickness direction of the packaging material, and a sealing portion forming an outer periphery of the first film laminate and the second film laminate, in which the sealing portion is bonded by the second CPP films facing each other.

A thickness of the second CPP film in the sealing portion may be formed to be greater than a thickness of the first CPP film arranged between the first **OPP film and the second OPP film.**

### [Advantageous Effects]

In this way, an embodiment of the present invention provides the first CPP film between the first OPP film and the second OPP film, thereby enhancing interlayer adhesive strength and preventing breakage during distribution.

In an embodiment, the first CPP film and the second CPP film are provided, so the overall thickness of the film laminate can be maintained the same while enhancing the interlayer adhesive strength. The sealing portion is formed by the second CPP film including a rubber component, so that the sealability of the packaging material can be maintained.

In addition, in an embodiment, the second CPP film is formed thicker than the first CPP film, thereby improving and maintaining sealability in the sealing portion of the packaging material.

### [Description of the Drawings]

FIG. 1 is a cross-sectional configuration view of a retort sterilization film laminate according to an embodiment of the present invention.
FIG. 2 is a perspective view of a packaging material including a retort sterilization film laminate according to an embodiment of the present invention.
FIG. 3 is a cross-sectional view taken along line III-III of FIG. 2.

### [Mode for Invention]

the present invention will be described more fully hereinafter with reference to the accompanying drawings, in which embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

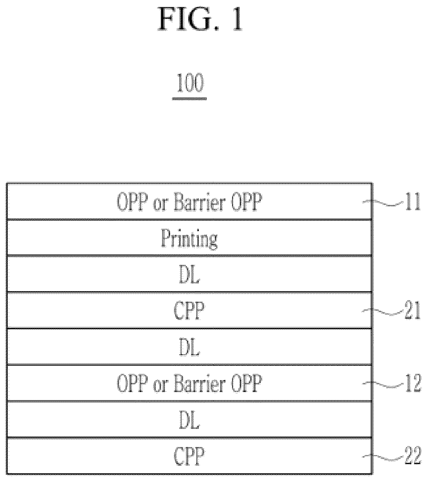

FIG. 1 is a cross-sectional configuration view of a retort sterilization film laminate according to an embodiment of the present invention. Referring to FIG. 1, a retort sterilization film laminate 100 of an embodiment includes a first OPP film 11, a first CPP film 21, a second OPP film 12, and a second CPP film 22.

The first OPP film 11, the first CPP film 21, the second OPP film 12, and the second CPP film 22 are laminated to each other with a dry lamination layer DL interposed between the respective films. The first OPP film 11 may have a printing layer.

The first OPP film 11, the first CPP film 21, the second OPP film 12, and the second CPP film 22 are formed of a single material to ensure excellent recyclability and form a film laminate 100 suitable for retort applications, where material use is restricted due to a heat treatment process and substitution is difficult.

The first OPP film 11 and the second OPP film 12 are formed of oriented polypropylene (OPP). For example, the first OPP film 11 and the second OPP film 12 may each have a thickness of 15 to 30 µm.

The first OPP film 11, which is a primary substrate forming a top layer in FIG. 1, provides properties that enable printing and offers heat resistance to prevent thermal damage. The second OPP film 12, which is a tertiary substrate forming a third layer from the top, reinforces and maintains strength.

At least one of the first OPP film 11 and the second OPP film 12 may be formed as a barrier OPP film that blocks oxygen or moisture. For example, the first OPP film 11 and the second OPP film 12 may each have a thickness of 15 to 30 µm.

When the first OPP film 11, which is a primary substrate, is formed as a barrier OPP film, the barrier OPP film has a barrier property against oxygen or moisture, provides properties that enable printing, and offers heat resistance to prevent thermal damage during retort sterilization and sealing.

As an example, the barrier OPP film may be formed as a transparent film deposited with AlOx. Additionally, the barrier OPP film may also be formed as a transparent film deposited with a SiOx type inorganic material. Additionally, the barrier OPP film may also be formed as a deposited transparent film of an organic-inorganic hybrid type, combining an organic compound with AlOx or SiOx, to improve hard and brittle properties of inorganic substances.

Additionally, the barrier OPP film may be formed as a transparent film that includes barrier coating materials or improves barrier properties by mixing plate-like substances, such as nanoclay. The barrier OPP film may also be formed as an OPP base barrier film.

The first CPP film 21 and the second CPP film 22 are formed of cast polypropylene (CPP). For example, the first CPP film 21 and the second CPP film 22 are used for retort applications and may have a combined thickness of 60 to 120 µm. The first CPP film 21 and the second CPP film 22 are used for retort applications and include rubber components for impact reinforcement.

The first CPP film 21, which is a secondary substrate forming a second layer from the top, includes a rubber component to reinforce impact strength. The second CPP film 22, which is a quaternary substrate forming a fourth layer from the top, improves sealability and orange peel resistance. That is, since sealing adhesiveness is critical for the second CPP film 22, it may include a larger amount of rubber components, which enable smooth sealing at low temperatures, than the first CPP film 21.

After the film laminate undergoes retort sterilization (typically at 121°C), the heat resistance of the film laminate deteriorates. When the heat resistance deteriorates, contents within the film laminate permeate into the film laminate, causing the film laminate to become bumpy like an orange peel, which significantly degrades the appearance quality of the film laminate product.

The orange peel resistance is a term used in the packaging and film industries and refers to the performance of a film laminate to retain its appearance quality without degradation. The second CPP film 22 can improve sealability and orange peel resistance due to the rubber components.

Note that the first CPP film 21 has surface irregularities on both surfaces by being corona-treated on both surfaces and is laminated to one surface of the first OPP film 11 on one surface and to one surface of the second OPP film 12 on the other surface.

Corona treatment not only creates physical irregularities to the surface of the first CPP film 21, which is nonpolar, but also oxidizes and polarizes the surface through electric discharge. Therefore, the first CPP film 21 improves the adhesion performance between the first OPP film 11 and the second OPP film 12 and can further improve the physical adhesion performance through the surface irregularities.

That is, the first OPP film 11 and the second OPP film 12 have extremely smooth and highly flat surfaces due to stretching, making it possible to polarize the surfaces through corona treatment while making it difficult to form physical irregularities, which results in low adhesive strength. However, the first CPP film 21 is interposed between the first OPP film 11 and the second OPP film 12, making it possible to increase mutual adhesive strength on both surfaces.

The first CPP film 21 may be used with a minimum thickness to provide adhesion performance between the first OPP film 11 and the second OPP film 12 within a range in which required impact strength can be reinforced. The first CPP film 21 provided with a minimum thickness can provide excellent adhesive strength by the surface irregularities of both surfaces created by corona treatment and wetting tension.

In general, for the interlayer adhesive strength of an adhesive to meet the required level, the wetting tension of the film must be at least 36 dynes. The first CPP film 21 has a wetting tension of 37 to 42 dynes through corona treatment on both surfaces, thereby enabling sufficient interlayer adhesive strength to be achieved.

That is, by performing a corona discharge treatment on the first CPP film 21, radicals, ions, and the like are generated on the surface to polarize it, thereby maximizing the adhesive strength of the adhesive. In addition, corona treatment can simultaneously achieve a physical adhesive effect by roughening the surface of the first CPP film 21 to create irregularities thereon, allowing the adhesive to adhere more effectively.

The first CPP film 21 with high impact strength as a retort CPP film can compensate for the rigidity and susceptibility to rupture drawbacks of the first OPP film 11 and the second OPP film 12. As illustrated, the sandwich structure where the first CPP film is positioned between the first OPP film 11 as a primary substrate and the second OPP film 12 as a tertiary substrate primarily enables the first OPP film 11 as a primary substrate to alleviate impacts from drops or external forces, thereby enhancing the overall strength of the retort sterilization film laminate 100.

The second CPP film 22 is intended to provide sealability in a packaging material 200 using the film laminate 100, and may be used with a thickness within a range of the combined thickness of the first CPP film 21 and the second CPP film 22, excluding the thickness of the first CPP film 21. The first CPP film 21 and the second CPP film 22 have a thickness ratio of 1:1 to 1:2.5. As an example, when the thickness of the first CPP film 21 is 30 to 50 µm, the second CPP film 22 may have a thickness of 30 to 70 µm.

In an embodiment, the divided first CPP film 21 and second CPP film 22, compared to the related art where a single CCP film is used, can improve the adhesive performance between the first OPP film 11 and the second OPP film 12 without causing an increase in thickness by using the same amount, i.e., the same thickness of the CPP films, and can enhance and maintain the sealability as the second CPP film 22 is formed thicker than the first OPP film 11.

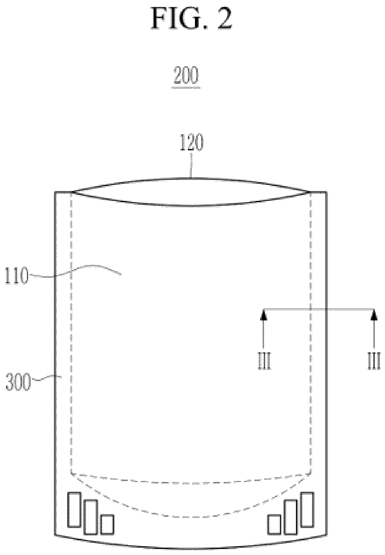

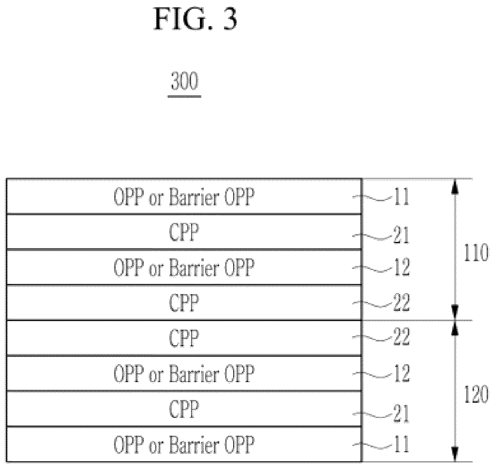

FIG. 2 is a perspective view of a packaging material including a retort sterilization film laminate according to an embodiment of the present invention, and FIG. 3 is a cross-sectional view taken along line III-III of FIG. 2. Referring to FIGS. 2 and 3, a packaging material 200 of an embodiment includes the retort sterilization film laminate 100 of FIG. 1.

The packaging material 200 can be formed as a self-standing type (e.g., a standing pouch) and a non-self-standing type (e.g., a three-side sealed pouch), and is illustrated here as a self-standing type for convenience.

In the packaging material 200, a first film laminate 110 forming one side and a second film laminate 120 forming the other side form a sealing portion 300 through attachment of upper and lower second CPP films 22 facing each other internally. For convenience, in FIG. 3, the printing layer and the dry lamination layer are omitted.

That is, the sealing portion 300 is formed by symmetrically arranging the first film laminate 110 and the second film laminate 120 and attaching two facing second CPP films 22. The two facing second CPP films 22 enable sufficient sealability to be provided to the sealing portion 300 of the packaging material 200.

Below, the excellent performance of the embodiment will be described by comparing the film laminate 100 of an example and a film laminate of a comparative example. The film laminate of the comparative example includes the first OPP film of the embodiment, the second OPP film, and a single CPP film (corresponding to the second CPP film of the embodiment and having no configuration corresponding to the first CPP film).
The total thicknesses of the film laminate 100 of the example and the film laminate of the comparative example are the same, and the combined thickness of the first CPP film 21 and the second CPP film 22 of the example is the same as the thickness of the CPP film of the comparative example. That is, the total amount of material used is the same. In the comparative example, the primary substrate is an OPP film, the secondary substrate is an OPP film, and the tertiary substrate is a CPP film.

**[Table 1]**

| Interlayer adhesive strength between respective films (gf/15mm²) | Before retort sterilization | | After retort sterilization | |
|---|---|---|---|---|
| | Example | Comparative Example | Example | Comparative Example |
| Primary substrate/secondary substrate | 310 | 190 | 275 | 205 |
| Secondary substrate/tertiary substrate | 225 | 205 | 230 | 230 |
| Tertiary substrate/quaternary substrate | 240 | absent | 250 | absent |

In the example, before retort sterilization, the interlayer adhesive strength between the primary substrate and the secondary substrate was 310 gf/15mm², the interlayer adhesive strength between the second substrate and the tertiary substrate was 225 gf/15mm², and the interlayer adhesive strength between the tertiary substrate and the quaternary substrate was 240 gf/15mm². In the comparative example, before retort sterilization, the interlayer adhesive strength between the primary substrate and the secondary substrate was 190 gf/15mm², and the interlayer adhesive strength between the second substrate and the tertiary substrate was 205 gf/15mm².

The example had interlayer adhesive strengths of 310 and 225 gf/15mm² on both surfaces of the secondary substrate, respectively. The comparative example had interlayer adhesive strengths of 190 and 250 gf/15mm² on both surfaces of the secondary substrate, respectively. It can be seen that, before retort sterilization, the adhesive strength of the example is significantly superior to that of the comparative example.

In the example, after retort sterilization, the interlayer adhesive strength between the primary substrate and the secondary substrate was 275 gf/15mm², the interlayer adhesive strength between the second substrate and the tertiary substrate was 230 gf/15mm², and the interlayer adhesive strength between the tertiary substrate and the quaternary substrate was 250 gf/15mm². In the comparative example, after retort sterilization, the interlayer adhesive strength between the primary substrate and the secondary substrate was 205 gf/15mm², and the interlayer adhesive strength between the second substrate and the tertiary substrate was 230 gf/15mm².

The example had interlayer adhesive strengths of 275 and 230 gf/15mm² on both surfaces of the secondary substrate, respectively. The comparative example had interlayer adhesive strengths of 205 and 230 gf/15mm² on both surfaces of the secondary substrate, respectively. It can be seen that, even after retort sterilization, the interlayer adhesive strength of the example is significantly superior to that of the comparative example.

In the example where the first CPP film 21 and the second CPP film 22 were applied, it was confirmed that the interlayer adhesive strength greatly increased both before and after retort sterilization, compared to the comparative example where a single CPP film was applied.
Note that when comparing the interlayer adhesive strength between respective materials, the example having a CPP film between the OPP film and the OPP film can increase the interlayer adhesive strength due to the wettability and the anchorage effect resulting from the wettability caused by the surface irregularities of the CPP film, compared to the comparative example having a lamination structure between the OPP film and the OPP film.

**[Table 2]**

| Interlayer adhesive strength between respective materials (gf/15mm²) | | OPP film/OPP film | | OPP film/CPP film | |
|---|---|---|---|---|---|
| Average | | 180 | | 301 | |
| Minimum | Maximum | 170 | 190 | 225 | 430 |

Seeing the interlayer adhesive strength between the respective materials, the OPP film and the OPP film have an average interlayer adhesive strength of 180 gf/15mm², and the OPP film and the CPP film have an average interlayer adhesive strength of 301 gf/15mm². The interlayer adhesive strength between the OPP film and the CPP film is significantly higher than that between the OPP film and the OPP film. The example implements the high interlayer adhesive strength not exhibited in the comparative example between the first CPP film 21 and the first OPP film 11 and between the first CPP film 21 and the second OPP film 12.

Below, the excellent performance of the embodiment will be described by comparing the packaging material 200 where the film laminate 100 of an example was applied and a packaging material of a comparative example. When applying the film laminate 100 to a packaging material, a ratio of the thickness of each layer to the total thickness can be changed for improved heating efficiency.

In the upper end of the film laminate 100, i.e. the outer side of the packaging material 200, the first and second OPP films 11 and 12, which are material layers with high strength, are formed thicker than the first and second CPP films 21 and 22. The lower end of the film laminate 100, i.e., the inner side of the packaging material 200, is composed of a retort layer that has a greater influence on heating efficiency. The second CPP film 22 arranged on the inner side of the retort layer is formed thicker than the first CPP film 21 arranged in the middle.

The increases in interlayer adhesive strength and impact strength are secured through the surface characteristics of the first and second OPP films 11 and 12 and the first and second CPP films 21 and 22, and distribution stability can be achieved while ultimately using the same or similar amount of PP raw material.

However, the thicknesses and their ratios of the first and second OPP films 11 and 12 and the first and second CPP films 21 and 22 can be increased or decreased depending on the distribution environment, for distribution stability, to adjust general physical properties such as tensile strength and sealing strength, in addition to interlayer adhesive strength.

The retort efficiency of the packaging material 200 was confirmed. Dart impact strength, which serves as an indicator to predict impact strength and distribution stability based on improvements in interlayer adhesive strength, is used. It was confirmed that the dart impact strength increased in the example compared to the comparative example, and that the dart impact strength was maintained similarly in the example compared to the comparative example even after retort sterilization.
The dart impact strength is the strength measured for the impact resistance of the film laminate 100 and packaging material 200 by a free-falling dart method using a dart drop impact tester.

**[Table 3]**

| Dart impact strength | | Before retort sterilization | | After retort sterilization |
|---|---|---|---|---|
| Example | Peak force (kgf) | | 44 | 42 |
| | Change rate after retort sterilization | | 4% | |
| Comparative Example | Peak force (kgf) | | 41 | 33 |
| | Change rate after retort sterilization | | 21% | |

In the example, the peak force of the dart impact strength decreased from 44 kgf before retort sterilization to 42 kgf after retort sterilization, and the rate of change in the peak force of the dart impact strength before and after retort sterilization was 4%. In contrast, in the comparative example, the peak force of the dart impact strength decreased from 41 kgf before retort sterilization to 33 kgf after retort sterilization, and the rate of change in the peak force of the dart impact strength before and after retort sterilization was 21%.

Therefore, it can be seen that the film laminate 100 and packaging material 200 of the example have an optimized configuration for cooking or distribution procedure, as the rate of change in the dart impact strength before and after retort sterilization is much smaller than that of the comparative example.

While this invention has been described in connection with what is presently considered to be practical embodiments, it is to be understood that the invention is not limited to the disclosed embodiments. On the contrary, it is intended to cover various modifications and equivalent arrangements included within the scope of the appended claims.

### (Explanation of symbols)

| | | | |
|---|---|---|---|
| 11: | first OPP film | 12: | second OPP film |
| 21: | first CPP film | 22: | second CPP film |
| 100: | film laminate | 110: | first film laminate |
| 120: | second film laminate | 200, 400: | packaging material |
| 300: | sealing portion | 410: | upper region |
| 411: | upper end | 420: | lower region |
| 421: | lower end | DL: | dry lamination layer |

## Claims

1. A retort sterilization film laminate comprising:
a first OPP film formed of oriented polypropylene (OPP);
a first CPP film formed of cast polypropylene (CPP) and laminated on one surface of the first OPP film;
a second OPP film formed of oriented polypropylene and laminated on one surface of the first CPP film; and
a second CPP film formed of cast polypropylene and laminated on one surface of the second OPP film.

2. The retort sterilization film laminate of claim 1, wherein:
at least one of the first OPP film and the second OPP film is formed as a barrier OPP film for blocking oxygen or moisture.

3. The retort sterilization film laminate of claim 2, wherein:
the barrier OPP film is formed as a transparent film deposited with AlOx.

4. The retort sterilization film laminate of claim 2, wherein:
the barrier OPP film is formed as a transparent film deposited with a SiOx type inorganic material.

5. The retort sterilization film laminate of claim 1, wherein:
the first CPP film has surface irregularities by being corona-treated on both surfaces.

6. The retort sterilization film laminate of claim 1, wherein:
the first CPP film and the second CPP film have a thickness ratio of 1:1 to 1:2.5.

7. The retort sterilization film laminate of claim 1, wherein:
the first CPP film and the second CPP film comprise a rubber component.

8. The retort sterilization film laminate of claim 1, wherein:
a dry lamination layer is provided between the respective films of the first OPP film, the first CPP film, the second OPP film, and the second CPP film.

9. A packaging material comprising the retort sterilization film laminate of any one of claims 1 to 8, the packaging material comprising:
a first film laminate forming one side in a thickness direction of the packaging material;
a second film laminate forming the other side in the thickness direction of the packaging material; and
a sealing portion forming an outer periphery of the first film laminate and the second film laminate, wherein
the sealing portion is bonded by the second CPP films facing each other.

10. The packaging material of claim 9, wherein:
a thickness of the second CPP film in the sealing portion is formed to be greater than a thickness of the first CPP film arranged between the first OPP film and the second OPP film.
